Europäisches Patentamt

European Patent Office

Office européen des brevets

(11) Veröffentlichungsnummer: **0 399 995**
**A1**

## EUROPÄISCHE PATENTANMELDUNG

(21) Anmeldenummer: 90890155.6

(22) Anmeldetag: 17.05.90

(51) Int. Cl.5: **A21B 5/02, A21C 15/02, A21D 13/06**

(30) Priorität: 24.05.89 AT 1255/89

(43) Veröffentlichungstag der Anmeldung:
28.11.90 Patentblatt 90/48

(84) Benannte Vertragsstaaten:
AT BE CH DE DK ES FR GB GR IT LI LU NL SE

(71) Anmelder: **Maresi Markenartikelvertrieb Gesellschaft m.b.H.**
**Werdertorgasse 5-7**
**A-1013 Wien(AT)**

(72) Erfinder: **Franta, Rudolf**
**Hörzingerstrasse 7/11**
**A-4020 Linz(AT)**

(74) Vertreter: **Wolfram, Gustav, Dipl.-Ing.**
**Schwindgasse 7 P.O. Box 205**
**A-1041 Wien(AT)**

(54) **Verfahren zur Herstellung eines Backwerkes sowie Formkörper aus Backwerk.**

(57) Die Herstellung eines geformten haltbaren, zuckerfreien oder zuckerarmen Backwerkes aus einem Mehl und eßbares Fett enthaltenden flüssigen Teig durch Formen des Teiges zu einem Formkörper, Backen des Formkörpers und gegebenenfalls Füllen des Formkörpers mit einer Füllmasse, welches Backwerk nach dem Backen zu einem Formkörper geformt werden kann, ist durch folgende Schritte gekennzeichnet:
- daß ein flüssiger Teig, enthaltend Vollkornmehl, Lecithin und Erdnußöl, bereitet,
- daß der Teig zu einem gegebenenfalls oberflächenstrukturierten Blatt geformt und das geformte Blatt gebacken,
- das gebackene Blatt beidseitig mit einer eßbaren Eiweißlösung imprägniert,
- das durch die Imprägnierung flexibel gewordene Blatt zu Formkörpern, insbesondere zu Formkörpern mit Hohlräumen, geformt wird und
- die Formkörper zur Entfernung enthaltener Feuchtigkeit, die mehr als 2 % übersteigt, getrocknet werden.

FIG. 1

EP 0 399 995 A1

## Verfahren zur Herstellung eines Backwerkes sowie Formkörper aus Backwerk

Die Erfindung betrifft ein Verfahren zur Herstellung eines geformten haltbaren, zuckerfreien oder zuckerarmen Backwerkes aus einem Mehl und eßbares Fett enthaltenden flüssigen Teig durch Formen des Teiges zu einem Formkörper, Backen des Formkörpers und gegebenenfalls Füllen des Formkörpers mit einer Füllmasse sowie einen nach diesem Verfahren hergestellten Formkörper aus haltbarem Backwerk.

Bekannte zuckerfreie bzw. zuckerarme Backwaren, wie z.B. Waffel, Tüten und Hohlformen verschiedener Art (vgl. GB-PS 2 159 688), konnten bisher ausschließlich in Formen gegossen werden. Zur Herstellung dieser Backwaren sind Formen erforderlich, in denen der Teig unter hohem Druck gebacken wird, wobei die Formen so auszuführen sind, daß sich die fertige Backware von der Form nach deren Öffnen gut lösen kann. Hierdurch war das Herstellungsverfahren teuer und kompliziert und man war in der Formgebung beschränkt. Beispielsweise war es nicht möglich, Backwerk in Form von zylindrischen Rollen herzustellen.

Für Backwaren mit hohem Zuckeranteil (mindestens 30 % im Backwerk) gibt es die Möglichkeit (vgl. US-PS 4 283 430), Backwerk in flachen Platten herzustellen und diese nach dem Backen einzurollen. Dieses gezuckerte Backwerk läßt sich jedoch nur für gesüßte Produkte verwenden.

Es ist bekannt, rollenartige Hohl-Teigprodukte durch Extrudieren aus zuckerfreiem Teig herzustellen, jedoch lassen der Geschmack und die Haltbarkeit der extrudierten Produkte zu wünschen übrig. Zudem fehlt der typische Backgeschmack.

Aus der DE-OS 2 556 254 ist ein Verfahren zur Herstellung eines Nahrungsmittels auf Brotbasis bekannt, bei dem Hohlkörper durch Extrudierung eines Teigbandes und anschließendes Aufwickeln auf einen Stab bei gleichzeitigem oder nachfolgendem Garen und Backen hergestellt wird.

Dieses Verfahren ist wegen des Wickelvorganges des Teigbandes problematisch. Hinsichtlich der Form der zylindrischen Rollen sind bei diesem Verfahren enge Grenzen gesetzt. Bei einem weiteren aus diesem Dokument bekannten Verfahren wird der Teig nur halb gar gebacken und dann schneckenförmig über eine Form gewickelt und anschließend fertig gebacken. Hiebei sind ebenfalls der Formgebung Grenzen gesetzt. Abgesehen davon ist dieses Verfahren wegen des zweimaligen Backens umständlich und kostenintensiv.

Aus der EP-A 0 061 545 ist ein Waffelbackverfahren bekannt, mit dem sich jedoch lediglich ebene Waffeln herstellen lassen.

Die Erfindung stellt sich die Aufgabe, ein Verfahren zur Herstellung ungezuckerten Backwerkes zu schaffen, wobei das Backwerk nach dem Backen zu Formkörpern, wie zu Rollen, geformt werden kann. Insbesondere stellt sich die Erfindung die Aufgabe, ein Backwerk zu schaffen, das aus einem nach dem Backen geformten Formkörper und einer darin enthaltenen zuckerfreien, pikant und würzig schmeckenden Fülle besteht.

Die der Erfindung zugrundeliegende Aufgabe wird durch die Kombination der folgenden Schritte gelöst:
- daß ein flüssiger Teig, enthaltend Vollkornmehl, Lecithin und Erdnußöl, bereitet,
- daß der Teig zu einem gegebenenfalls oberflächenstrukturierten Blatt geformt und das geformte Blatt gebacken,
- das gebackene Blatt beidseitig mit einer eßbaren Eiweißlösung imprägniert,
- das durch die Imprägnierung flexibel gewordene Blatt zu Formkörpern, insbesondere zu Formkörpern mit Hohlräumen, geformt wird und
- die Formkörper zur Entfernung enthaltener Feuchtigkeit, die mehr als 2 % übersteigt, getrocknet und
- gegebenenfalls die Hohlräume mit einer eßbaren Füllung gefüllt werden, wobei die Füllung ebenfalls maximal 2 % Feuchtigkeit enthält.

Vorzugsweise wird der flüssige Teig aus 15 bis 25 % Mehlbestandteilen, 1 bis 5 % Erdnußöl-Lecithingemisch, bis 15 % Würz- und Hilfsstoffen und Rest Wasser bereitet (in Gew.%).

Das so hergestellte Backwerk ist biologisch wertvoll und durch den geringen Restfeuchtigkeitsgehalt verpackt mindestens ein Jahr haltbar. Es handelt sich also um ein Dauerwarenprodukt, bei dem die biologisch wertvollen Ingredientien und Mineralstoffe nicht verändert werden.

Gemäß einer bevorzugten Ausführungsform wird das gebackene Blatt zu mehrlagigen Röllchen geformt.

Weiters ist es gemäß dem erfindungsgemäßen Verfahren möglich, das gebackene Blatt auch zu einem kegelmantelförmigen Gebilde zu formen.

Ein besonders einfaches Verfahren ist dadurch gekennzeichnet, daß eine Mehrzahl von gebackenen Blättern gestapelt und in gestapeltem Zustand zu Formlingen geschnitten wird, bevor die einzelnen Formlinge beidseitig mit der Eiweißlösung besprüht werden.

Eine besonders gute Verformbarkeit und Formbeständigkeit des Teiges ist dadurch erreichbar, wenn dem Teig ein Verdickungsmittel auf der Basis von Cellulose und/oder Cellulosederivate, wie Carboxymethylcellulose (CMC) und/oder Hydroxyethyl- und/oder -propylcellulose und/oder Xanthan zugesetzt wird, wobei zweckmäßig das Verdickungsmittel in einer Menge von 0,5 bis 1 Gew.% des Teiges in den Teig beigemischt wird. Das Verdickungsmittel erleichtert die Verformung des Gebackenen zu beliebigen Formen, insbesondere zu Körpern mit engen Hohlräumen, wie Röllchen.

Ein Formkörper, der nach dem erfindungsgemäßen Verfahren hergestellt ist, ist dadurch gekennzeichnet, daß er aus mehreren Schichten von aus einem Vollkornmehl, Lecithin und Erdnußöl enthaltenden Teig gebackenen Blättern mit zwischen den einzelnen Schichten vorhandenen dünnen Eiweißlagen besteht, einen Feuchtigkeitsgehalt von weniger als 2 % aufweist und gegebenenfalls Hohlräume besitzt, die mit eßbaren Füllungen gefüllt sind, welche ebenfalls maximal 2 % Feuchtigkeit besitzen.

Das Backwerk besteht zweckmäßig aus 60 bis 80 % Vollkornmehl, 5 bis 15 % Trockenkäse, 5 bis 12 % Emulgatoren und Würzstoffen (in Gew.%).

Der Formkörper ist vorzugsweise mit einer Käsemasse aus 30 bis 50 % Trockenkäse mit 40 bis 50 % Fettgehalt, maximal 2 % Wasser, Rest Erdnußfett und Würzstoffen, gefüllt (in Gew.%).

Gemäß einer weiteren bevorzugten Variante ist der Formkörper mit einer Käsemasse aus 30 bis 50 % Trockenkäse mit 40 bis 50 % Fettgehalt, maximal 2 % Wasser und 10 bis 20 % gefriergetrocknetem Fleisch oder gefriergetrockneten Pilzen, Rest Erdnußfett und Würzstoffen, gefüllt (in Gew.%).

Ein besonders gut ausgeformter Formkörper ist dadurch gekennzeichnet, daß er von aus ein Verdickungsmittel auf der Basis von Cellulose und/oder Cellulosederivate, wie Carboxymethylcellulose (CMC) und/oder Hydroxyethyl- und/oder -propylcellulose und/oder Xanthan enthaltenden Teig gebackenen Blättern gebildet ist.

Gemäß einer bevorzugten Ausführungsform weist ein Dauer-Backwerk, insbesondere eine Waffel, das durch Ausbacken eines zu Formkörpern geformten flüssigen Teiges, der aus Mehl, insbesondere Vollkornmehl, einem wasserlöslichen Verdickungsmittel auf der Basis von Cellulose und/oder Cellulosederivate, wie Carboxymethylcellulose (CMC) und/oder Hydroxyethyl- und/oder -propylcellulose und/oder Xanthan in einer Menge bis 1 Gew.%, sowie Geschmacksstoffen und gegebenenfalls Trennmittel, wie Lecithin und/oder Erdnußöl bereitet ist, erhältlich ist, einen Wassergehalt von höchstens 2% auf. Ein Teig dieser Art läßt sich leicht formen und behält während des Backens seine Form, sodaß der Ausschuß sehr gering ist (was insbesondere für bestimmte Formen einzuhaltendes Backwerk von Bedeutung ist).

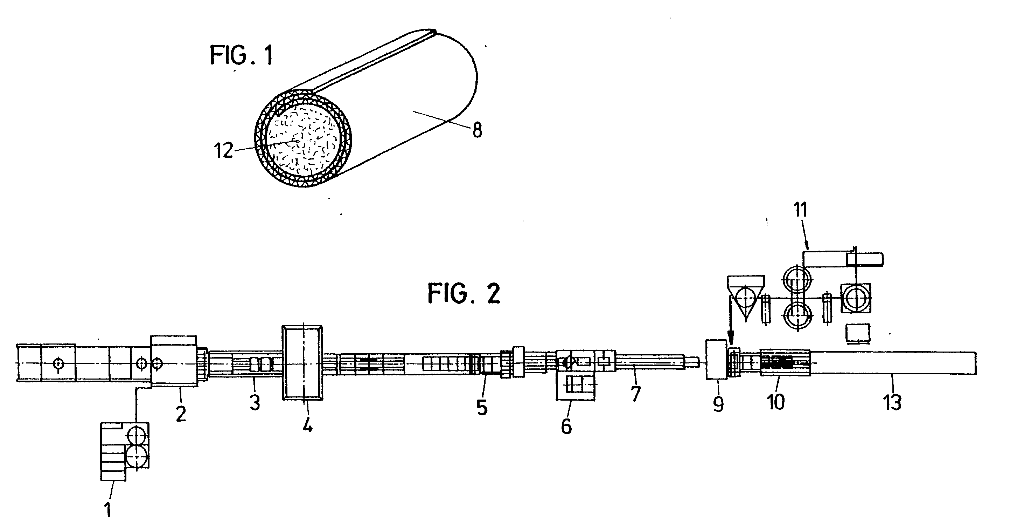

Die Erfindung ist nachfolgend anhand eines Ausführungsbeispieles und anhand der Zeichnung näher erläutert. Die Zeichnung zeigt in Fig. 1 ein gefülltes Backwerk im Schrägriß geschnitten, Fig. 2 veranschaulicht eine Produktionsanlage zur Durchführung des erfindungsgemäßen Verfahrens in schematischer Darstellung.

Zunächst wurden aus einem an einer Teigzubereitungsstation 1 zubereiteten flüssigen Teig mit folgender Zusammensetzung (in Gew.%):

| | |
|---|---|
| Weizenmehl | 3,06 |
| Roggenmehl | 6,13 |
| Dinkelmehl | 6,13 |
| Buchweizen | 5,10 |
| Käsepulver | 3,49 |
| Brotgewürzmischung | 1,98 |
| Erdnußöl-Lecithingemisch | 1,90 |
| Sojamehl | 0,82 |
| Trocken-Magermilch | 0,58 |
| Ammoniumbicarbonat | 0,71 |
| Salz | 0,59 |
| Sauerteig-Hefepulver | 0,60 |
| Wasser | Rest |

flache, 2,2 mm starke Blätter geformt und in einem Backautomaten 2 gebacken. Nach dem Backprozeß ergab sich eine Restfeuchte von 1,5%.

Die Blätter wiesen eine Länge und Breite auf, die einem Vielfachen der Dimensionen des fertigen Produktes, im vorliegenden Fall mit Käsemasse gefüllte Röllchen, entsprach. Die gebackenen Blätter wurden mit einer Hühnereiweißlösung beidseitig besprüht, u.zw. in einem Präpariertunnel 3. Die hiedurch flexibel gewordenen Blätter wurden anschließend in einem Form- und Rollautomaten 4 über einen zylindrischen Dorn gerollt.

Anschließend wurde das Backwerk mit dem Dorn in einen Heißlufttunnel 5 eingebracht. der auch mit einer Mikrowellenheizung versehen ist. In diesem Tunnel erfolgte die Entfernung der durch die aufgesprühte Hühnereiweißlösung zugeführten Feuchtigkeit. Nach Abziehen vom Dorn an einer Formenentfernerstation 6 erfolgte noch eine Nachtrocknung in einem Entlüftungstunnel 7, so daß sich wiederum eine maximale Restfeuchte von 1,5 % einstellte.

Die so gebildeten Formkörper 8, die Brotteig-Gebäck-Röllchen, wurden anschließend in ein Magazin 9 verbracht. Sodann wurden die Formkörper 8 mittels Injektion in der Füllstation 10 von beiden Seiten her gefüllt, u.zw. mit einer in einer Füllmassenaufbereitungsstation 11 hergestellten Käsemasse 12 mit folgender Zusammensetzung (in Gew.%):

| | |
|---|---|
| Käse (Käsepulver, sprühgetrocknet) 43 % Fett | 33.8 |
| Erdnußfett 28° | 51,5 |
| Käsegrundstoff natürlich | 8.6 |
| Erdnußöl | 5.6 |

Das in der Käsemasse 12 enthaltene Erdnußfett liegt beim Füllvorgang. der unter Druck bei einer Temperatur von etwa 22°C erfolgt, in flüssigem Zustand vor, so daß der Füllvorgang auch für längere Röllchen 8 unproblematisch bewerkstelligt werden kann.

Nach Durchlaufen der gefüllten Formkörper 8 durch eine Verweil- und Kristallisationsstrecke 13 können diese in die gewünschte Länge unterteilt werden.

Nach Unterteilen der gefüllten Backware wird diese zweckmäßig in eine mit Polyäthylen kaschierte Aluminiumfolie eingehüllt und luftdicht verschlossen, wodurch sich eine besonders lange Haltbarkeit ergibt.

Als Füllmasse kann auch eine Käse-Steinpilz-Fülle mit der folgenden Zusammensetzung (in Gew.%) verwendet werden:

| | |
|---|---|
| Käsepulver 43 % Fett | 31,1 |
| Erdnußfett 28° | 36,8 |
| Erdnußöl-Erdnußfett 3 : 1 | 15,8 |
| Erdnußöl | 5,2 |
| Steinpilze gefriergetrocknet | 10,4 |

Der erfindungsgemäß hergestellte Formkörper kann mit Füllungen in verschiedenen weiteren Varianten gefüllt werden. Es können gefriergetrocknete Zusätze sowohl in Pulver- als auch in Granulatform in den Sorten Huhn, Kalbfleisch. Rindfleisch, Wild, Schwein, Lamm, Truthahn, Leber, Pilze und Fische aller Art verwendet werden. Als besonders geschmackvoll hat sich eine Käse-Schinken-Fülle in folgender Zusammensetzung (in Gew.%) erwiesen:

| | |
|---|---|
| Käsepulver 43 % Fett | 31,2 |
| Erdnußfett 28° | 31,6 |
| Erdnußöl-Lecithin | 15,7 |
| Erdnußöl | 5,3 |
| Schinken gefriergetrocknet | 15,4 |

Nach einer bevorzugten Ausführungsform wird der Formkörper 8 aus Blättern, die aus einem Teig folgender Zusammensetzung (in Gew.%) gebacken werden, hergestellt:

| | |
|---|---|
| Vollkornmehl | 15,84 |
| Brotgewürz | 1,98 |
| Erdnußöl | 1,34 |
| Carboxymethylcellulose | 0,79 |
| Sauerteig (trocken) | 0,79 |
| Salz | 0,79 |
| Soja-Eiweiß | 0,79 |
| Lecithin | 0,63 |
| Ammoniumbicarbonat | 0,55 |
| Magermilchpulver | 0,39 |
| Kümmelgranulat | 0,31 |
| Knoblauchpulver | 0,23 |
| Zwiebelpulver | 0,08 |
| Wasser | Rest |

Dieser Teig enthält als Verdickungsmittel Carboxymethylcellulose, auch CMC genannt, durch welches Verdickungsmittel eine besonders gute Füllung der Waffelformen ermöglicht wird. Hiedurch ist die Bildung einwandfreier Blätter sichergestellt, sodaß nur wenig Abfall bzw. Ausschuß entsteht.

Anstelle des CMC läßt sich auch hochviskose Cellulose in etwa der selben Menge zugeben.

Als Verdickungsmittel haben sich weiters Xanthan sowie Hydroxyethyl- und -propylcellulose bewährt.

## Ansprüche

1. Verfahren zur Herstellung eines geformten haltbaren, zuckerfreien oder zuckerarmen Backwerkes aus einem Mehl und eßbares Fett enthaltenden flüssigen Teig durch Formen des Teiges zu einem Formkörper, Backen des Formkörpers und gegebenenfalls Füllen des Formkörpers mit einer Füllmasse, dadurch gekennzeichnet,
- daß ein flüssiger Teig, enthaltend Vollkornmehl, Lecithin und Erdnußöl, bereitet,
- daß der Teig zu einem gegebenenfalls oberflächenstrukturierten Blatt geformt und das geformte Blatt gebacken,
- das gebackene Blatt beidseitig mit einer eßbaren Eiweißlösung imprägniert,
- das durch die Imprägnierung flexibel gewordene Blatt zu Formkörpern, insbesondere zu Formkörpern (8) mit Hohlräumen, geformt wird und
- die Formkörper zur Entfernung enthaltener Feuchtigkeit, die mehr als 2 % übersteigt, getrocknet und
- gegebenenfalls die Hohlräume mit einer eßbaren Füllung (12) gefüllt werden, wobei die Füllung ebenfalls maximal 2 % Feuchtigkeit enthält.

2. Verfahren nach Anspruch 1, dadurch gekennzeichnet, daß der flüssige Teig aus 15 bis 25 % Mehlbestandteilen, 1 bis 5 % Erdnußöl-Lecithingemisch, bis 15% Würz- und Hilfsstoffen und Rest Wasser bereitet wird (in Gew.%).

3. Verfahren nach Anspruch 1 oder 2, dadurch gekennzeichnet, daß das gebackene Blatt zu mehrlagigen Röllchen (8) geformt wird.

4. Verfahren nach Anspruch 1 oder 2, dadurch gekennzeichnet, daß das gebackene Blatt zu einem kegelmantelförmigen Gebilde geformt wird.

5. Verfahren nach einem oder mehreren der Ansprüche 1 bis 4, dadurch gekennzeichnet, daß eine Mehrzahl von gebackenen Blättern gestapelt und in gestapeltem Zustand zu Formlingen geschnitten wird, bevor die einzelnen Formlinge beidseitig mit der Eiweißlösung besprüht werden.

6. Verfahren nach einem oder mehreren der Ansprüche 1 bis 5, dadurch gekennzeichnet, daß dem Teig ein Verdickungsmittel auf der Basis von Cellulose und/oder Cellulosederivate, wie Carboxymethylcellulose (CMC) und/oder Hydroxyethyl- und/oder -propylcellulose und/oder Xanthan zugesetzt wird.

7. Verfahren nach Anspruch 6, dadurch gekennzeichnet, daß das Verdickungsmittel in einer Menge von 0,5 bis 1 Gew.% des Teiges in den Teig beigemischt wird.

8. Formkörper aus haltbarem Backwerk, hergestellt nach einem oder mehreren der Ansprüche 1 bis 7, dadurch gekennzeichnet, daß er aus mehreren Schichten von aus einem Vollkornmehl, Lecithin und Erdnußöl enthaltenden Teig gebackenen Blättern mit zwischen den einzelnen Schichten vorhandenen dünnen Eiweißlagen besteht, einen Feuchtigkeitsgehalt von weniger als 2 % aufweist und gegebenenfalls Hohlräume besitzt, die mit eßbaren Füllungen gefüllt sind, welche ebenfalls maximal 2 % Feuchtigkeit besitzen.

9. Formkörper nach Anspruch 8, dadurch gekennzeichnet, daß das Backwerk aus 60 bis 80 % Vollkornmehl, 5 bis 15 % Trockenkäse, 5 bis 12 % Emulgatoren und Würzstoffen besteht (in Gew.%).

10. Formkörper nach Anspruch 8 oder 9, dadurch gekennzeichnet, daß er mit einer Käsemasse (12) aus 30 bis 50·% Trockenkäse mit 40 bis 50 % Fettgehalt, maximal 2 % Wasser, Rest Erdnußfett und Würzstoffen, gefüllt ist (in Gew.%).

11. Formkörper nach Anspruch 8 oder 9, dadurch gekennzeichnet, daß er mit einer Käsemasse aus 30 bis 50 % Trockenkäse mit 40 bis 50 % Fettgehalt, maximal 2 % Wasser und 10 bis 20 % gefriergetrocknetem Fleisch oder gefriergetrockneten Pilzen, Rest Erdnußfett und Würzstoffen, gefüllt ist (in Gew.%).

12. Formkörper nach einem oder mehreren der Ansprüche 7 bis 10, dadurch gekennzeichnet, daß er von aus ein Verdickungsmittel auf der Basis von Cellulose und/oder Cellulosederivate, wie Carboxymethylcellulose (CMC) und/oder Hydroxyethyl- und/oder -propylcellulose und/oder Xanthan enthaltenden Teig gebackenen Blättern gebildet ist.

13. Dauer-Backwerk, insbesondere Waffel, erhältlich durch Ausbacken eines zu Formkörpern geformten flüssigen Teiges, der aus Mehl, insbesondere Vollkornmehl, einem wasserlöslichen Verdickungsmittel auf der Basis von Cellulose und/oder Cellulosederivate, wie Carboxymethylcellulose (CMC) und/oder Hydroxyethyl- und/oder -propylcellulose und/oder Xanthan in einer Menge bis 1 Gew.%, sowie Geschmackstoffen und gegebenenfalls Trennmittel, wie Lecithin und/oder Erdnußöl bereitet ist, und einen Wassergehalt von höchstens 2 % aufweist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-303299 (H. HERTIG)<br>* das ganze Dokument *<br>--- | 1, 2, 4, 6-13 | A21B5/02<br>A21C15/02<br>A21D13/06 |
| Y | US-A-2668117 (J. BUCCI)<br>* Spalte 3, Zeile 30 - Spalte 3, Zeile 60 *<br>--- | 1, 2, 4, 6-13 | |
| A | DE-A-3817919 (F. HAAS WAFFELMASCHINEN INDUSTRIEGESELLSCHAFT M.B.H.)<br>* Spalte 2, Zeile 23 - Spalte 2, Zeile 28 *<br>--- | 1 | |
| A | US-A-3477851 (J.O. BENSON ET AL)<br>* Spalte 8, Zeile 44 - Spalte 13, Zeile 50 *<br>--- | 1, 9-11 | |
| A | GB-A-1242350 (G.H.R. WATSON)<br>* Seite 1, Zeilen 73 - 83 *<br>* Seite 3, Zeilen 18 - 64 *<br>--- | 6, 7, 12, 13 | |
| A | GB-A-2056838 (NISSHIN FLOUR MILLING CO. LTD.)<br>* Zusammenfassung *<br>--- | 6, 7, 12, 13 | |
| A | WO-A-8504075 (HERSEY FOODS CORP.)<br>* Zusammenfassung; Figur 1 *<br>--- | 5 | RECHERCHIERTE SACHGEBIETE (Int. Cl.5) |
| A | GB-A-2167934 (F. HAAS WAFFELMASCHINEN INDUSTRIEGESELLSCHAFT M.B.H.)<br>* Seite 2, Zeilen 24 - 39 *<br>----- | 1 | A21B<br>A21C<br>A21D |

Der vorliegende Recherchenbericht wurde für alle Patentansprüche erstellt

| Recherchenort | Abschlußdatum der Recherche | Prüfer |
|---|---|---|
| DEN HAAG | 18 JULI 1990 | FRANKS N.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument

EPO FORM 1503 03.82 (P0403)